# EUROPEAN PATENT APPLICATION

(11) **EP 4 610 796 A1**
(43) Date of publication of application: **03.09.2025**
(21) Application number: 23881894.2
(22) Date of filing: 25.10.2023
(51) Int. Cl.: G06F 3/04817

(54) **APPLICATION INTERFACE DISPLAY METHOD AND APPARATUS, ELECTRONIC DEVICE, AND STORAGE MEDIUM**

(30) Priority: 28.10.2022 CN 202211335149
(71) Applicant: Vivo Mobile Communication Co., Ltd., Dongguan, Guangdong 523863 (CN)
(72) Inventor: ZHAO, Qian, Dongguan, Guangdong 523863 (CN)
(74) Representative: Murgitroyd & Company
(86) International application number: PCT/CN2023/126577
(87) International publication number: WO 2024/088317

(57) **Abstract**

This application discloses an application interface display method and apparatus, an electronic device, and a storage medium. The method includes: receiving a first input of a user; updating display positions of a plurality of application identifiers in response to the first input; when at least one application identifier in the plurality of application identifiers at least partially overlaps with a target identifier, displaying an application interface window corresponding to the at least one application identifier in a first interface layout manner, where an application identifier is an application icon, a background application card, or an application interface thumbnail, where when the target identifier is a target interface layout template, the first interface layout manner is an interface layout manner corresponding to the target interface layout template; or when the target identifier is a first application identifier, the displaying an application interface window corresponding to the at least one application identifier in a first interface layout manner includes: displaying the application interface window corresponding to the at least one application identifier and an application interface window corresponding to the first application identifier in the first interface layout manner.

## Description

### CROSS-REFERENCE TO RELATED APPLICATION

This application claims priority to Chinese Patent Application No. 202211335149.6, filed on October 28, 2022, which is incorporated herein by reference in its entirety.

### TECHNICAL FIELD

This application relates to the communication field, and specifically, to an application interface display method and apparatus, an electronic device, and a storage medium.

### BACKGROUND

When a user needs to operate more applications on a same interface, for example, open a chat application and a video application at the same time to reply to messages when watching a video, the user may start an application first, then enable a split-screen mode of an electronic device to display an application interface of the application in a split-screen window of the electronic device, choose to start a new application through another split-screen window of the electronic device, and display a corresponding application interface. In this way, this prevents the user from switching between different applications.

However, in the foregoing method, a fixed display mode is used when interfaces of a plurality of applications are displayed on the electronic device through split-screen windows. To be specific, a screen is split first, an interface that is displayed first with a same size as the screen is reduced to an interface of a size of the split-screen window, to display the interface in a split-screen, and an interface corresponding to another application is displayed through another split-screen. In this way, a manner of displaying interfaces through windows is undiversified and has poor flexibility.

### SUMMARY

An objective of embodiments of this application is to provide an application interface display method and apparatus, an electronic device, and a storage medium, to resolve problems that a manner of displaying interfaces through windows is undiversified and has poor flexibility.

According a first aspect, an embodiment of this application provides an application interface display method. The method includes: receiving a first input of a user; updating display positions of a plurality of application identifiers in response to the first input; when at least one application identifier in the plurality of application identifiers at least partially overlaps with a target identifier, displaying an application interface window corresponding to the at least one application identifier in a first interface layout manner, where the application identifier is an application icon, a background application card, or an application interface thumbnail, where when the target identifier is a target interface layout template, the first interface layout manner is an interface layout manner corresponding to the target interface layout template; or when the target identifier is a first application identifier, the displaying an application interface window corresponding to the at least one application identifier in a first interface layout manner includes: displaying the application interface window corresponding to the at least one application identifier and an application interface window corresponding to the first application identifier in the first interface layout manner.

According to a second aspect, an embodiment of this application provides an application interface display apparatus. The application interface display apparatus includes a receiving module, an update module, and a display module. The receiving module is configured to receive a first input of a user. The update module is configured to update display positions of a plurality of application identifiers in response to the first input received by the receiving module. The display module is configured to: when at least one application identifier in the plurality of application identifiers at least partially overlaps with a target identifier, display an application interface window corresponding to the at least one application identifier in a first interface layout manner, where the application identifier is an application icon, a background application card, or an application interface thumbnail, where when the target identifier is a target interface layout template, the first interface layout manner is an interface layout manner corresponding to the target interface layout template. The display module is specifically configured to: when the target identifier is a first application identifier, display the application interface window corresponding to the at least one application identifier and an application interface window corresponding to the first application identifier in the first interface layout manner.

According to a third aspect, embodiments of this application provide an electronic device. The electronic device includes a processor and a memory. The memory stores a program or instructions executable on the processor. When the program or the instructions are executed by the processor, the steps of the method according to the first aspect are implemented.

According to a fourth aspect, embodiments of this application provide a readable storage medium. The readable storage medium stores a program or instructions. When the program or the instructions are executed by a processor, the steps of the method according to the first aspect are implemented.

According to a fifth aspect, embodiments of this application provide a chip. The chip includes a processor and a communication interface. The communication interface is coupled to the processor. The processor is configured to run a program or instructions to implement the method according to the first aspect.

According to a sixth aspect, embodiments of this application provide a computer program product. The computer program product is stored in a storage medium. The program product is executed by at least one processor to implement the method according to the first aspect.

In the embodiments of this application, the user may perform input to trigger the electronic device to update the display positions of the plurality of application identifiers. In addition, when the at least one application identifier in the plurality of application identifiers at least partially overlaps with the target identifier, the electronic device may display the application interface window corresponding to the at least one application identifier in the first interface layout manner. When the target identifier is the target interface layout template, the first interface layout manner is the interface layout manner corresponding to the target interface layout template. When the target identifier is the first application identifier, the electronic device may display the application interface window corresponding to the at least one application identifier and the application interface window corresponding to the first application identifier in the first interface layout manner. In this situation, in one case, the electronic device changes the display positions of the plurality of application identifiers because of user input, and when the at least one application identifier in the plurality of application identifiers whose display positions are changed at least partially overlaps with the target interface layout template, the electronic device may determine to display the application interface window corresponding to the at least one application identifier in the interface layout manner corresponding to the target interface layout template. In another case, when the electronic device changes the display positions of the plurality of application identifiers because of the user input, and the at least one application identifier in the plurality of application identifiers whose display positions are changed at least partially overlaps with the first application identifier, the electronic device may determine the first interface layout manner, and display the application interface window corresponding to the at least one application identifier and the application interface window corresponding to the first application identifier in the first interface layout manner. Therefore, diversity and flexibility of displaying interfaces through windows are improved.

### BRIEF DESCRIPTION OF THE DRAWINGS

FIG. 1 is a schematic flowchart of an application interface display method according to an embodiment of this application;
FIG. 2 is a schematic diagram 1 of an example of a window display interface according to an embodiment of this application;
FIG. 3 is a schematic diagram 2 of an example of a window display interface according to an embodiment of this application;
FIG. 4 is a schematic diagram 3 of an example of a window display interface according to an embodiment of this application;
FIG. 5 is a schematic diagram 4 of an example of a window display interface according to an embodiment of this application;
FIG. 6 is a schematic diagram 5 of an example of a window display interface according to an embodiment of this application;
FIG. 7 is a schematic diagram 1 of an example of adjusting an application interface window according to an embodiment of this application;
FIG. 8 is a schematic diagram 2 of an example of adjusting an application interface window according to an embodiment of this application;
FIG. 9 is a schematic diagram 3 of an example of adjusting an application interface window according to an embodiment of this application;
FIG. 10 is a schematic diagram 4 of an example of adjusting an application interface window according to an embodiment of this application;
FIG. 11 is a schematic diagram 1 of an example of a newly created interface layout template according to an embodiment of this application;
FIG. 12 is a schematic diagram 2 of an example of a newly created interface layout template according to an embodiment of this application;
FIG. 13 is a schematic structural diagram of an application interface display apparatus according to an embodiment of this application;
FIG. 14 is a schematic diagram 1 of a hardware structure of an electronic device according to an embodiment of this application; and
FIG. 15 is a schematic diagram 2 of a hardware structure of an electronic device according to an embodiment of this application.

### DETAILED DESCRIPTION

The following clearly describes the technical solutions in embodiments of this application with reference to the accompanying drawings in the embodiments of this application. It is clear that, the described embodiments are some of embodiments of this application rather than all of the embodiments. All other embodiments obtained by a person of ordinary skill in the art based on embodiments of this application shall fall within the protection scope of this application.

The terms "first", "second", and the like in the specification and claims of this application are used to distinguish between similar objects, but are not used to describe a specific sequence or order. It may be understood that, the data used in such a way are interchangeable in proper circumstances, so that embodiments of this application can be implemented in sequences other than the sequence illustrated or described herein. Objects distinguished by using "first" and "second" are generally of one class, and a quantity of the objects are not limited. For example, there may be one or more first objects. In addition, "and/or" in the specification and the claims represents at least one of connected objects, and the character "/" generally represents an "or" relationship between associated objects.

With reference to the accompanying drawings, the following provides detailed descriptions of an application interface display method provided in the embodiments of this application by using specific embodiments and application scenarios thereof.

The application interface display method in the embodiments of this application may be applied to a scenario in which the application interface is displayed through a plurality of windows on a same screen.

With the continuous development of electronic devices, making full use of screen space and maximizing multitasking efficiency becomes a core demand of consumers. Currently, when a user needs to operate more applications on a same interface, for example, enable a chat application and a video application at the same time to reply to messages when watching a video, the user may enable an application first, then enable a split-screen mode of an electronic device to display an application interface of the application in a split-screen window of the electronic device, choose to enable a new application through another split-screen window of the electronic device, and display a corresponding application interface. In this way, this prevents the user from switching between different applications. However, in the foregoing method, a fixed display mode is used when interfaces of a plurality of applications are displayed on the electronic device through split-screen windows. To be specific, a screen is split first, an interface that is displayed first with a same size as the screen is reduced to an interface of a size of the split-screen window, to display the interface in a split-screen, and an interface corresponding to another application is displayed through another split-screen. In this way, a manner of displaying interfaces through windows is undiversified and has poor flexibility.

In the solutions provided in the embodiments of this application, the user may perform input to trigger the electronic device to update display positions of a plurality of application identifiers. In addition, when at least one application identifier in the plurality of application identifiers at least partially overlaps with a target identifier, the electronic device may display an application interface window corresponding to the at least one application identifier in a first interface layout manner. When the target identifier is a target interface layout template, the first interface layout manner is an interface layout manner corresponding to the target interface layout template. When the target identifier is a first application identifier, the electronic device may display the application interface window corresponding to the at least one application identifier and an application interface window corresponding to the first application identifier in the first interface layout manner. In this solution, in one case, the electronic device changes the display positions of the plurality of application identifiers because of user input, and when the at least one application identifier in the plurality of application identifiers whose display positions are changed at least partially overlaps with the target interface layout template, the electronic device may determine to display the application interface window corresponding to the at least one application identifier in the interface layout manner corresponding to the target interface layout template. In another case, when the electronic device changes the display positions of the plurality of application identifiers because of the user input, and the at least one application identifier in the plurality of application identifiers whose display positions are changed at least partially overlaps with the first application identifier, the electronic device may determine the first interface layout manner, and display the application interface window corresponding to the at least one application identifier and the application interface window corresponding to the first application identifier in the first interface layout manner. Therefore, diversity and flexibility of displaying interfaces through windows are improved.

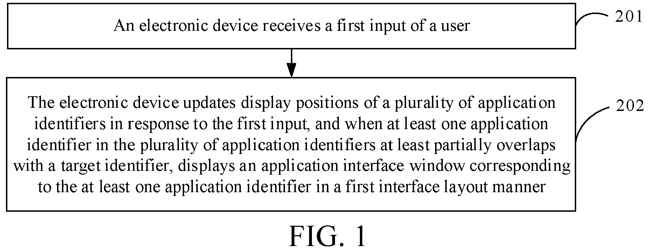

An embodiment of this application provides an application interface display method. FIG. 1 is a flowchart of an application interface display method according to an embodiment of this application. The method may be applied to an electronic device. As shown in FIG. 1, the application interface display method provided in this embodiment of this application may include the following step 201 and step 202.

Step 201: The electronic device receives a first input of a user.

In this embodiment of this application, the first input is an input for an application identifier.

Step 202: The electronic device updates display positions of a plurality of application identifiers in response to the first input, and when at least one application identifier in the plurality of application identifiers at least partially overlaps with a target identifier, displays an application interface window corresponding to the at least one application identifier in a first interface layout manner.

In this embodiment of this application, the application identifier is an application icon, a background application card, or an application interface thumbnail.

When the target identifier is a target interface layout template, the first interface layout manner is an interface layout manner corresponding to the target interface layout template.

Optionally, in this embodiment of this application, the first input may be a drag input for the application identifier, to update the display positions of the plurality of application identifiers.

It may be understood that, when the target identifier is the target interface layout template, and the at least one application identifier in the plurality of application identifiers at least partially overlaps with the target identifier, that is, the user drags the plurality of application identifiers to the target interface layout template, and the at least one application identifier in the plurality of application identifiers at least partially overlaps with the target interface layout template, the electronic device may display the application interface window corresponding to the at least one application identifier in the interface layout manner corresponding to the target interface layout template.

It may be understood that, when a target interface layout template includes three windows, if the user drags the plurality of application identifiers (for example, four application identifiers) to the target interface layout template, only three application identifiers of the four application identifiers at least partially overlap the target interface layout template (that is, the at least one application identifier in the plurality of application identifiers at least partially overlaps the target identifier).

It may be understood that, when the user triggers the electronic device to display a background interface, the background interface may include at least one background application card, and each background application card corresponds to an interface of an application that is running.

Optionally, in this embodiment of this application, when the application identifier is the application icon, an application interface corresponding to the application identifier is a default interface or a preset interface of an application corresponding to the application icon.

It may be understood that, the application interface window corresponding to the application identifier is a window for displaying an interface of the application corresponding to the application identifier.

Optionally, in this embodiment of this application, when the application identifier is the background application card, the application interface corresponding to the application identifier is an interface corresponding to the background application card, or a default interface of an application corresponding to the background application card.

Optionally, in this embodiment of this application, when the application identifier is the application interface thumbnail, the application interface corresponding to the application identifier is an interface in which the application interface thumbnail is magnified and displayed, or a default interface of an application corresponding to the application interface thumbnail.

Optionally, in this embodiment of this application, when the target identifier is the first application identifier, step 202 of "the electronic device displays an application interface window corresponding to the at least one application identifier in a first interface layout manner" may be specifically implemented through the following step 202a.

Step 202a: The electronic device displays the application interface window corresponding to the at least one application identifier and an application interface window corresponding to the first application identifier in the first interface layout manner.

It may be understood that, when the target identifier is the first application identifier, and the at least one application identifier in the plurality of application identifiers at least partially overlaps with the target identifier, that is, after the user drags the plurality of application identifiers to update the display positions of the plurality of application identifiers, the at least one application identifier in the plurality of application identifiers at least partially overlaps with the first application identifier. In this case, the electronic device displays the application interface window corresponding to the at least one application identifier and the application interface window corresponding to the first application identifier in the first interface layout manner.

It may be understood that, if the user performs input on the plurality of application identifiers (such as an application identifier 1 and an application identifier 2), the electronic device may be triggered to update display positions of the application identifier 1 and the application identifier 2. If updated display positions of the application identifier 1 and the application identifier 2 are that the application identifier 1 at least partially overlaps with the first application identifier, the application identifier 2 at least partially overlaps with the application identifier 1, and the application identifier 2 does not overlap with the first application identifier, only one of the two application identifiers at least partially overlaps with the first application identifier (that is, at least one application identifier in the plurality of application identifiers at least partially overlaps with the target identifier).

Optionally, in this embodiment of this application, the first application identifier may be the application icon, the background application card, or the application interface thumbnail.

Optionally, in this embodiment of this application, the target identifier is the first application identifier, the application identifier is the application interface thumbnail, and step 202a may be specifically implemented through the following step 202a1.

Step 202a1: The electronic device displays the application interface window corresponding to the at least one application identifier and the application interface window corresponding to the first application identifier in an interface layout manner corresponding to a combined effect.

In this embodiment of this application, the combined effect is determined based on updated display positions of the plurality of application identifiers.

Optionally, in this embodiment of this application, before the electronic device receives the first input of the user, the electronic device may receive an input of the user for a third interface, to display an application preview interface, and display, in the application preview interface, an application interface thumbnail of at least one application that is running, where the application interface thumbnail of the at least one application includes the first application identifier.

For example, the third interface is a desktop, a background application interface, or a foreground application interface.

For example, the application interface thumbnail may be a default interface of the application, a preset interface of the application, or the interface corresponding to the background application card.

For example, if the third interface includes a created split-screen interface combination, when the application preview interface is displayed, a related combination is displayed on the application preview interface with the combined effect.

It may be understood that, after the electronic device displays, in the application preview interface, the application interface thumbnail of the at least one application that is running, the user may drag application interface thumbnails of the plurality of applications, to trigger the electronic device to update display positions of a plurality of application interface thumbnails, and when at least one application interface thumbnail in the plurality of application interface thumbnails at least partially overlaps with the first application identifier, the electronic device displays an application interface window corresponding to the at least one application interface thumbnail and the application interface window corresponding to the first application identifier based on the updated display positions of the plurality of application interface thumbnails and a display position of the first application identifier.

For example, the combined effect may be understood as an effect of combining a plurality of independently displayed application interface thumbnails together for display.

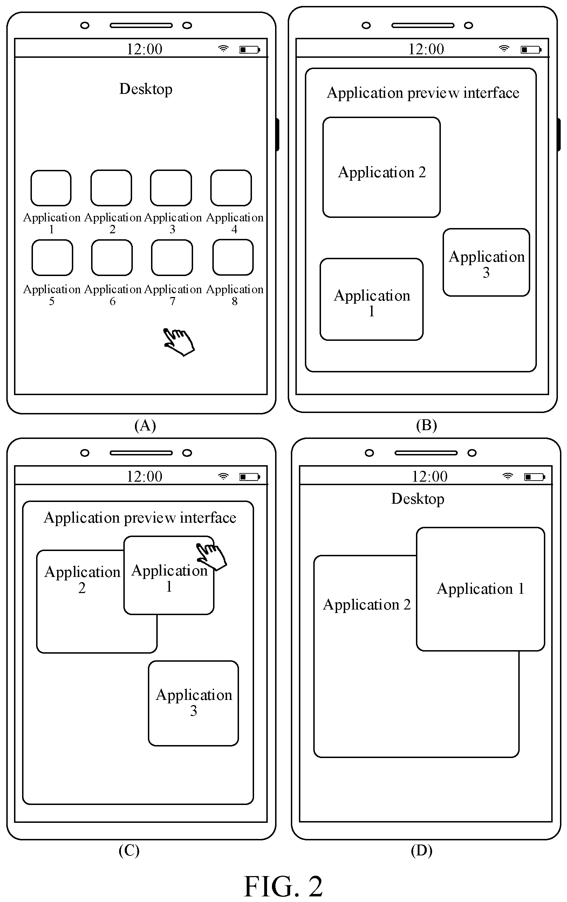

For example, as shown in (A) in FIG. 2, when a mobile phone displays the desktop, the user may tap a blank region of the desktop. As shown in (B) in FIG. 2, the mobile phone displays the application preview interface, and displays, in the application preview interface, the application interface thumbnail of the at least one application that is running (such as an application interface thumbnail of an application 1, an application interface thumbnail of an application 2, and an application interface thumbnail of an application 3), where the first application identifier is the application interface thumbnail of the application 2. As shown in (C) in FIG. 2, the user may drag the application interface thumbnail of the application 1 to a display region of the application interface thumbnail of the application 2, to form an application interface thumbnail with the combined effect. As shown in (D) in FIG. 2, the mobile phone displays application interface windows corresponding to the application interface thumbnail of the application 1 and the application interface thumbnail of the application 2 in an interface layout manner corresponding to the combined effect.

For example, the combined effect may be a partial overlapping effect or a complete overlapping effect, and the partial overlapping effect may include an application interface thumbnail that is completely covered and displayed in a partial region of another application interface thumbnail.

In this way, because the user can customize and combine application interface thumbnails to display the application interface window corresponding to the application interface thumbnail, diversity of the electronic device in displaying interfaces through windows is improved.

For example, in a process of dragging the application interface thumbnail in the application preview interface, the user may reverse dragging to cancel the drag operation.

For example, after the electronic device displays the application interface thumbnail with the combined effect on the application preview interface, the user may shake the electronic device, to trigger the electronic device to restore the at least one application interface thumbnail to an initial status, that is, a display state before the user drags the application interface thumbnail.

Optionally, in this embodiment of this application, the electronic device may recommend a related combined effect for the user based on information such as a user use scenario and a user use habit. For example, the user is prompted to drag to combine two application interface thumbnails in a form of a dynamic effect.

Optionally, in this embodiment of this application, the user may create a plurality of combined effects in the application preview interface, and save the combined effects, which is convenient for subsequent direct use.

Optionally, in this embodiment of this application, step 202a1 may be specifically implemented through the following step 202a2 or step 202a3.

Step 202a2: When the combined effect of the at least one application identifier and the first application identifier is the partial overlapping effect, the electronic device displays the application interface window corresponding to the at least one application identifier and the application interface window corresponding to the first application identifier in an interface overlapping layout manner of the partial overlapping effect.

It may be understood that, when the electronic device displays the application interface window, if the combined effect of the at least one application identifier and the first application identifier is the partial overlapping effect, the electronic device performs displaying based on the combined effect, that is, the partial overlapping effect, of the at least one application identifier and the first application identifier on the application preview interface.

Step 202a3: When the combined effect of the at least one application identifier and the first application identifier is a complete overlapping effect, the electronic device displays the application interface window corresponding to the at least one application identifier and the application interface window corresponding to the first application identifier in an interface split-screen layout manner.

It may be understood that, when the electronic device displays the application interface window, if the combined effect of the at least one application identifier and the first application identifier is the complete overlapping effect, the electronic device evenly displays the application interface window corresponding to the at least one application identifier and the application interface window corresponding to the first application identifier in the interface split-screen layout manner.

For example, the electronic device may determine a quantity of windows corresponding to an interface split-screen layout based on a quantity of the at least one application identifier and a quantity of first application identifiers.

For example, if combined effects of two application identifiers completely overlap, the electronic device divides two windows of equal sizes on the screen to display application interfaces corresponding to the two application identifiers respectively.

In this way, flexibility of displaying, by the electronic device, interfaces through windows is improved.

An embodiment of this application provides the application interface display method. In one case, the electronic device changes the display positions of the plurality of application identifiers because of user input, and when the at least one application identifier in the plurality of application identifiers whose display positions are changed at least partially overlaps with the target interface layout template, the electronic device may determine to display the application interface window corresponding to the at least one application identifier in the interface layout manner corresponding to the target interface layout template. In another case, when the electronic device changes the display positions of the plurality of application identifiers because of the user input, and the at least one application identifier in the plurality of application identifiers whose display positions are changed at least partially overlaps with the first application identifier, the electronic device may determine the first interface layout manner, and display the application interface window corresponding to the at least one application identifier and the application interface window corresponding to the first application identifier in the first interface layout manner. Therefore, the diversity and the flexibility of displaying interfaces through windows are improved.

Optionally, in this embodiment of this application, the target identifier is the target interface layout template, and before step 201, the application interface display method provided in this embodiment of this application further includes the following step 301.

Step 301: The electronic device displays at least one interface layout template and a first interface.

In this embodiment of this application, each interface layout template corresponds to one interface layout manner, the at least one interface layout template includes the target interface layout template, the first interface is the desktop or the background application interface, the desktop includes the application icon, and the background application interface includes the background application card.

Optionally, in this embodiment of this application, when the first interface is displayed, the user may perform input on the first interface, to trigger the electronic device to display the at least one interface layout template.

For example, the input on the first interface may be a touch input (such as a tap input, a drag input, or a slide input), a preset gesture input, or another feasibility input, to trigger the electronic device to display the at least one interface layout template. This may be specifically determined based on an actual use requirement. This is not limited in this embodiment of this application.

For example, the input on the first interface may be an input to a blank region in the first interface, an input on a preset position, or an input on any position.

For example, the input on the first interface may be an input of the user on a preset control in the first interface.

For example, the user may perform input on a region outside the at least one interface layout template, to trigger the electronic device to cancel displaying of the at least one interface layout template.

Optionally, in this embodiment of this application, the electronic device may determine the at least one interface layout template based on a screen size of the electronic device and a status of the electronic device.

For example, the status of the electronic device may be a landscape state or a portrait state.

For example, when the electronic device detects that a screen height is less than a preset threshold, the electronic device may determine that the electronic device is in the landscape state, to determine the at least one interface layout template matching a current status of the electronic device. Alternatively, when the electronic device detects that a screen width is less than a preset threshold, the electronic device may determine that the electronic device is in the portrait state, to determine the at least one interface layout template matching a current status of the electronic device.

For example, when the screen size of the electronic device is small, each interface layout template in the at least one interface layout template may include a small quantity of windows, or when the screen size of the electronic device is large, each interface layout template in the at least one interface layout template may include a large quantity of windows.

Optionally, in this embodiment of this application, the first interface may be the foreground application interface, that is, an interface of an application (for example, a target interface of a first application).

For example, the user may perform input on the target interface of the first application, to trigger the electronic device to display the at least one interface layout template, and automatically display the target interface in a window of each interface layout template in the at least one interface layout template, that is, display an application interface window corresponding to the target interface in each interface layout template. In addition, the user may perform input on a target interface layout template in the at least one interface layout template, to trigger the electronic device to update the first interface to display an interface including the application interface window corresponding to the target interface.

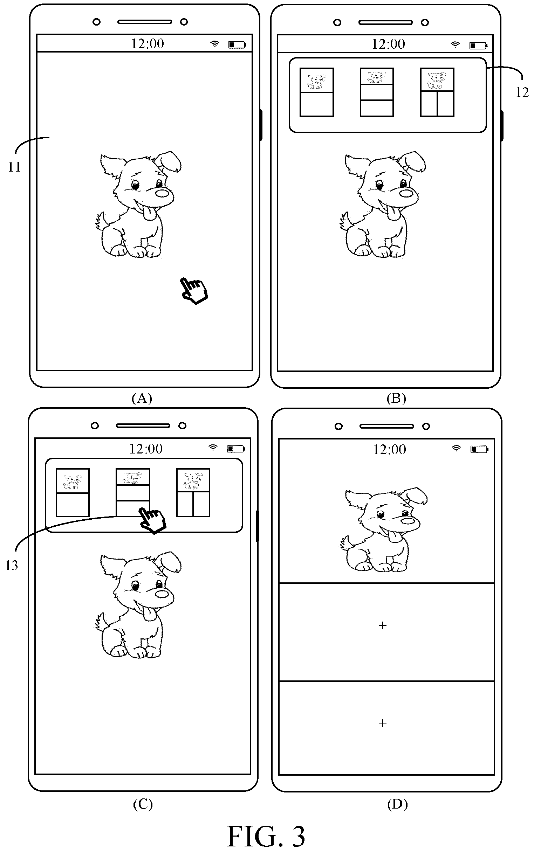

For example, as shown in (A) in FIG. 3, when the mobile phone displays the first interface of the first application (for example, an interface 11 of the application 1), the user may tap a blank region of the interface 11. As shown in (B) in FIG. 3, the mobile phone displays at least one interface layout template 12, and displays a preview interface of the interface 11 of the application 1 in a window in each interface layout template in the at least one interface layout template 12. In addition, as shown in (C) in FIG. 3, the user may perform input on the target interface layout template (for example, the interface layout template 13). As shown in (D) in FIG. 3, the mobile phone divides the screen into a plurality of windows and displays the plurality of windows on the screen in the interface layout manner corresponding to the interface layout template 13, and displays the interface 11 of the application 1 in one window.

Optionally, in this embodiment of this application, after "the electronic device updates display positions of a plurality of application identifiers" in step 202, and before "the electronic device displays an application interface window corresponding to the at least one application identifier in a first interface layout manner", the application interface display method provided in this embodiment of this application further includes the following step 401 and step 402.

Step 401: When the at least one application identifier in the plurality of application identifiers at least partially overlaps with the at least one interface layout template, the electronic device displays the application interface window corresponding to the at least one application identifier in the at least one interface layout template.

Optionally, in this embodiment of this application, the user may drag the plurality of application identifiers to the at least one interface layout template, and when the at least one application identifier in the plurality of application identifiers at least partially overlaps with the at least one interface layout template, the electronic device may display the application interface window corresponding to the at least one application identifier in the at least one interface layout template.

In this way, the user can simultaneously check an effect obtained when the application interface corresponding to the at least one application identifier is displayed through the at least one interface layout template, and the user does not need to switch the interface layout template for a plurality of times, to check an effect obtained when the application interface corresponding to the at least one application identifier is displayed through different interface layout templates. Therefore, the flexibility of displaying, by the electronic device, interfaces through windows is improved.

Step 402: The electronic device receives a second input for the target interface layout template in the at least one interface layout template.

Optionally, in this embodiment of this application, the second input may be a touch input (such as a tap input, a drag input, or a slide input), a preset gesture input, or another feasibility input. This is not limited in this embodiment of this application.

Optionally, in this embodiment of this application, the second input is configured to trigger the electronic device to update the first interface to the second interface displayed in the first interface layout manner.

Optionally, in this embodiment of this application, that "the electronic device displays an application interface window corresponding to the at least one application identifier in a first interface layout manner" in step 202 may be specifically implemented through the following step 202b.

Step 202b: The electronic device updates, in response to the second input, the first interface to the second interface displayed in the first interface layout manner.

In this embodiment of this application, the second interface includes an application interface window displayed in the target interface layout template.

It may be understood that, after the electronic device displays the application interface window corresponding to the at least one application identifier in the at least one interface layout template, the user may perform input on the target interface layout template in the at least one interface layout template, to trigger the electronic device to display the second interface. The second interface includes the application interface window displayed in the target interface layout template. That is, the electronic device displays the application interface window corresponding to the at least one application identifier in the interface layout manner corresponding to the target interface layout template.

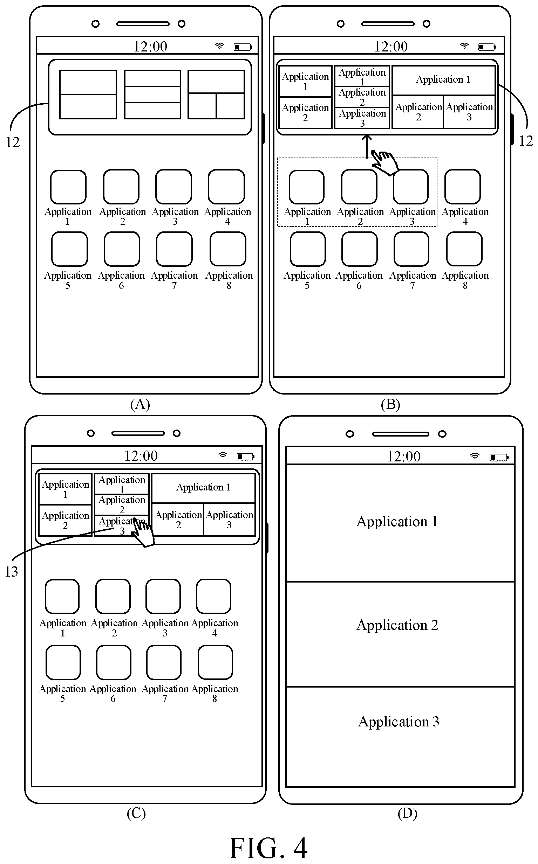

An example in which the electronic device is the mobile phone is used for description. With reference to (A) in FIG. 2, the user may tap the blank region of the desktop. As shown in (A) in FIG. 4, the mobile phone displays the at least one interface layout template 12. As shown in (B) in FIG. 4, the user may drag the plurality of application identifiers (such as an icon of the application 1, an icon of the application 2, and an icon of the application 3) to the at least one interface layout template 12, to trigger the mobile phone to display the application interface window corresponding to the at least one application identifier in each interface layout template in the at least one interface layout template 12. As shown in (C) in FIG. 4, the user may tap the target interface layout template (for example, the interface layout template 13). As shown in (D) in FIG. 4, the mobile phone displays the second interface, where the second interface includes an application interface window displayed in the interface layout template 13.

Optionally, in this embodiment of this application, after the electronic device updates the first interface to the second interface displayed in the first interface layout manner, the user may perform input on the second interface, to trigger the electronic device to display the at least one interface layout template in the second interface.

For example, the electronic device displays the at least one interface layout template in the second interface, and the user may perform input on another interface layout template in the at least one interface layout template, to trigger the electronic device to display the application interface window corresponding to the at least one application identifier in an interface layout manner corresponding to the another interface layout template.

In this way, flexibility of displaying, by the electronic device, the application interface window corresponding to the at least one application identifier through the different interface layout templates is improved.

Optionally, in this embodiment of this application, after step 202b, the application interface display method provided in this embodiment of this application further includes the following step 501 and step 502.

Step 501: When a blank window exists in the second interface, the electronic device receives a third input of the user for a respondable object in the application interface window included in the second interface.

Optionally, in this embodiment of this application, there are two cases for the situation that the blank window exists in the second interface.

### Case 1:

If the user drags the plurality of application identifiers (for example, three application identifiers) to the at least one interface layout template, and four windows exist in the target interface layout template, the electronic device displays application interfaces corresponding to the three application identifiers in three windows in the target interface layout template. In this case, the blank window exists in the target interface layout template. In addition, if the user performs input on the target interface layout template in the at least one interface layout template, the blank window exists in the second interface that the electronic device is triggered to display.

### Case 2:

When the first interface is an interface of an application (for example, the target interface of the first application), and each interface layout template in the at least one interface layout template displayed by the electronic device displays the application interface window corresponding to the target interface, the user may perform input on the target interface layout template (the target interface layout template includes the four windows) in the at least one interface layout template, to trigger the electronic device to display the second interface. The second interface includes the application interface window in the target interface layout template, that is, the application interface window corresponding to the target interface. In this case, the blank window exists in the second interface.

Optionally, in this embodiment of this application, after the user performs input on an object displayed in the application interface window, if the electronic device can display a next-level interface corresponding to the object in the application interface window, the object may be referred to as the respondable object,
A contact control is used as an example. After the user performs input on the contact control, the electronic device may display a contact list.

Optionally, in this embodiment of this application, the respondable object may be any one of the following: a favorites control, a chat bar, a menu control, and the like.

Optionally, in this embodiment of this application, the third input may be an input of dragging the respondable object to the blank window.

Step 502: The electronic device updates, in response to the third input, an interface corresponding to the respondable object to the blank window for display.

For example, when the respondable object is the favorites control, the interface corresponding to the respondable object is a favorites list interface, or when the respondable object is the contact control, the interface corresponding to the respondable object is a contact list interface.

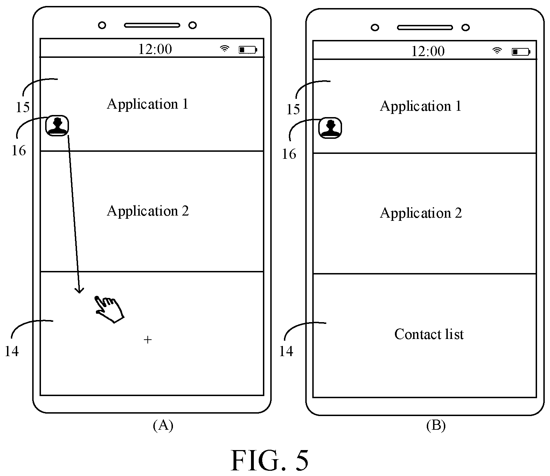

For example, as shown in (A) in FIG. 5, the mobile phone displays the second interface. The second interface includes the application interface window (such as an application interface window corresponding to an identifier of an application 1 and an application interface window corresponding to an identifier of an application 2) displayed in the target interface layout template and a blank window 14. The user may drag a respondable object (for example, a contact control 16) in an application interface window 15 to the blank window 14. As shown in (B) in FIG. 5, the mobile phone displays the contact list interface corresponding to the contact control in the blank window 14.

In this way, flexibility of displaying, by the electronic device, different interfaces of a same application in a same interface is improved.

Optionally, in this embodiment of this application, the user may perform input on the blank window (for example, a first window) existing in the second interface, to trigger the electronic device to switch to display an interface including at least one application icon, and the user may perform input on any icon (for example, the first application icon) in the at least one application icon, to trigger the electronic device to display an interface of an application corresponding to the first application icon in the first window.

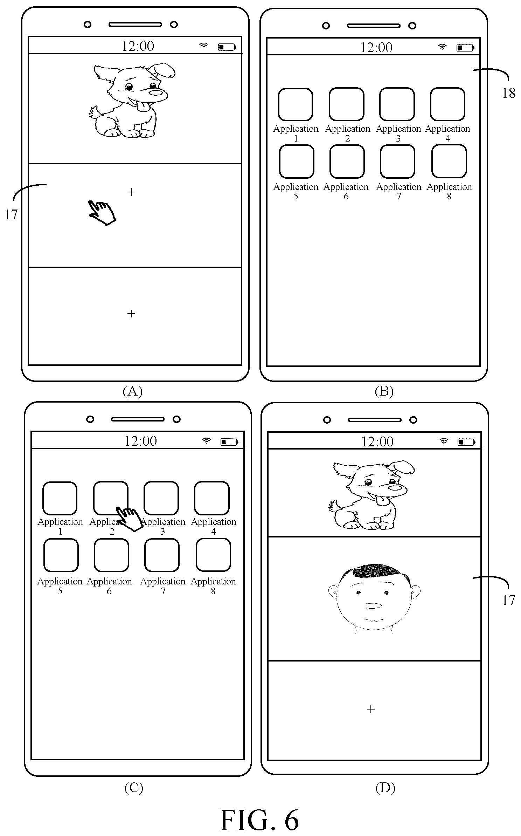

For example, with reference to (D) in FIG. 3, as shown in (A) in FIG. 6, the user may tap a blank window 17. As shown in (B) in FIG. 6, the mobile phone displays an interface 18. The interface 18 includes the at least one application icon. In addition, as shown in (C) in FIG. 6, the user may tap the icon of the application 2. As shown in (D) in FIG. 6, the mobile phone displays the interface of the application 2 in the blank window 17.

Optionally, in this embodiment of this application, after the electronic device displays the at least one interface layout template, the user may first select the target interface layout template, to trigger the electronic device to display a plurality of blank windows in the interface layout manner corresponding to the target interface layout template, and the user selects content to fill the blank window.

In this way, the diversity of displaying, by the electronic device, interfaces through windows is improved.

Optionally, in this embodiment of this application, after step 401, the application interface display method provided in this embodiment of this application further includes the following step 601 and step 602.

Step 601: The electronic device receives a fourth input of the user for a first application interface when a blank window exists in the target interface layout template.

In this embodiment of this application, the first application interface is an application interface included in an application interface window in a first interface layout template in the at least one interface layout template.

It may be understood that, if the user drags the plurality of application identifiers (for example, three application identifiers) to the at least one interface layout template, and four windows exist in the target interface layout template, the electronic device displays application interfaces corresponding to the three application identifiers in the three windows of the target interface layout template. In this case, the blank window exists in the target interface layout template.

Optionally, in this embodiment of this application, the first interface layout template may be any one of the at least one interface layout template.

Optionally, in this embodiment of this application, the fourth input may be an input of dragging the first application interface to the blank window in the target interface layout template.

Step 602: The electronic device updates, in response to the fourth input, the first application interface to the blank window for display.

It may be understood that, the user drags the first application interface to the blank window in the target interface layout template, to trigger the electronic device to display the first application interface in the blank window.

Optionally, in this embodiment of this application, the application identifier is the application interface thumbnail, and the application interface thumbnail is an application interface thumbnail of at least one application that is running. Before step 201, the application interface display method provided in this embodiment of this application further includes the following step 701 to step 704.

Step 701: The electronic device determines a minimum display size of an application interface of at least one application based on a screen size of the electronic device.

It may be understood that, minimum display sizes of application interfaces of the at least one application corresponding to electronic devices with different screen sizes are different, and the minimum display sizes are used to ensure that the user can distinguish application interface content of the at least one application.

Step 702: The electronic device determines at least one display size based on the minimum display size and historical use information of each application.

In this embodiment of this application, each display size is a display size of an application interface of an application in the application preview interface.

Optionally, in this embodiment of this application, the historical use information of each application may include at least one of the following: application use duration and a quantity of application use times in a preset time period.

Optionally, in this embodiment of this application, the display size of the application interface of the application in the application preview interface may be calculated by the electronic device through the following formula: S=A*T*X.

A is the minimum display size of the application interface of the application, T is the application use duration, and X is the quantity of application use times in the preset time period.

It may be understood that, when the application use duration of the application is long and the quantity of application use times in the preset time period is large, the display size of the application interface of the application in the application preview interface is large.

It may be understood that, if display sizes of application interfaces of applications in the at least one application in the application preview interface are equal, it indicates that application use duration of applications and quantities of application use times of the applications in the preset time period are equal.

Step 703: The electronic device determines a display order of the application interface of the at least one application based on the historical use information of each application.

Optionally, in this embodiment of this application, the electronic device may determine the display order of the application interface of each application based on the application use duration of each application.

Specifically, the electronic device may sort the application use duration of each application, and then determine the display order of the application interface of each application based on sorting.

Step 704: The electronic device displays the application interface thumbnail of the at least one application in the application preview interface based on the at least one display size and the display order.

It may be understood that, the electronic device may display the application interface thumbnail of the at least one application based on a determined display size of the application interface of the at least one application and a determined display order of the application interface of the at least one application.

Optionally, in this embodiment of this application, if a quantity of the at least one application that is running is large, the electronic device may display the application interface thumbnail of the at least one application in pages, that is, the user may perform page turning input on the application preview interface, to trigger the electronic device to display application interface thumbnails of all the at least one application that is running.

In this way, because the display size and the display order of the application interface thumbnail of the at least one application are determined by the electronic device based on the historical use information of each application, it is convenient for the user to combine the application identifiers.

Optionally, in this embodiment of this application, after step 202, the application interface display method provided in this embodiment of this application further includes the following step 801 to step 803.

Step 801: The electronic device displays a first control.

In this embodiment of this application, the first control is configured to adjust a layout manner of the application interface window corresponding to the at least one application identifier.

Optionally, in this embodiment of this application, after the electronic device displays the application interface window corresponding to the at least one application identifier in the first interface layout manner, the user may perform input on a current interface, to trigger the electronic device to display the first control.

Optionally, in this embodiment of this application, the first control may be a rotation control or a flip control.

Optionally, in this embodiment of this application, the first control may be displayed in a floating manner on the application interface window corresponding to the at least one application identifier.

Step 802: The electronic device receives a fifth input of the user for the first control.

Optionally, in this embodiment of this application, the fifth input may be a touch input (such as a tap input, a drag input, or a slide input), a preset gesture input, or another feasibility input. This is not limited in this embodiment of this application.

For example, the fifth input is configured to: mirror flip or rotate, by a preset degree, the application interface window corresponding to the at least one application identifier.

Step 803: The electronic device mirror flips or rotates, by the preset degree, the application interface window corresponding to the at least one application identifier in response to the fifth input.

Optionally, in this embodiment of this application, after the electronic device rotates the application interface window corresponding to the at least one application identifier by the preset degree, because the window size may change, the electronic device may automatically adjust the display size of the application interface corresponding to the at least one application identifier in the window.

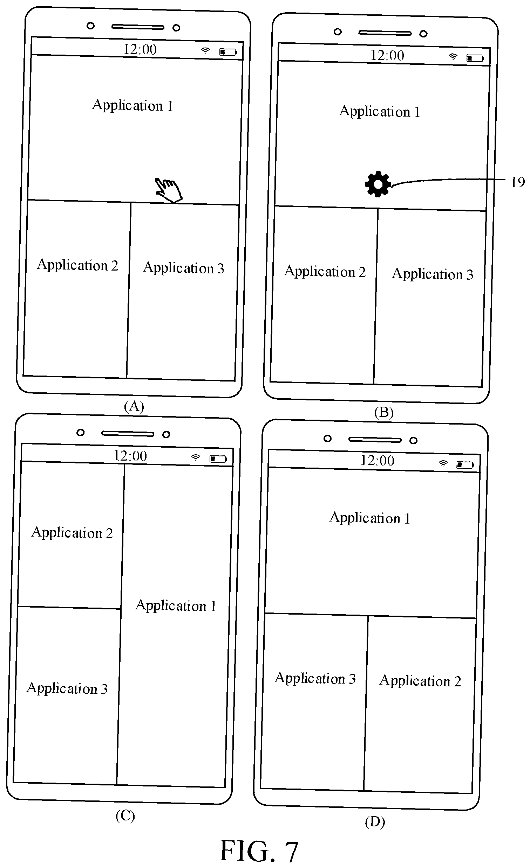

For example, as shown in (A) in FIG. 7, when the mobile phone displays the application interface window corresponding to the at least one application identifier (for example, an identifier of an application 1, an identifier of an application 2, and an identifier of an application 3) in the first interface layout manner, the user may perform tap input. As shown in (B) in FIG. 7, the mobile phone displays a first control 19. Then, the user may perform input on the first control 19. As shown in (C) in FIG. 7, the mobile phone rotates the application interface window corresponding to the at least one application identifier by 90 degrees. Alternatively, as shown in (D) in FIG. 7, the application interface window corresponding to the at least one application identifier is mirror flipped.

Optionally, in this embodiment of this application, after the electronic device displays the application interface window corresponding to the at least one application identifier in the first interface layout manner, the user may drag a window dividing line of the application interface window, to adjust a display size of the application interface window corresponding to the at least one application identifier.

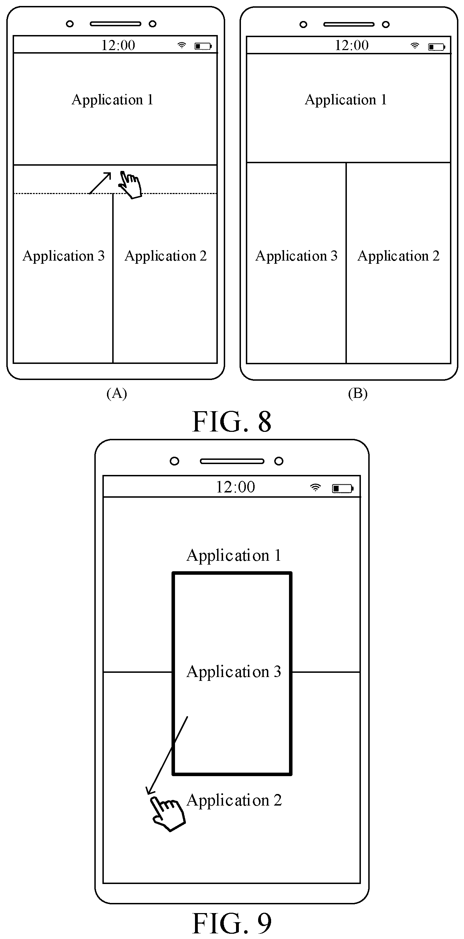

For example, with reference to (D) in FIG. 7, as shown in (A) in FIG. 8, the user may drag the window dividing line of the application interface window. As shown in (B) in FIG. 8, the mobile phone adjusts the display size of the application interface window corresponding to the at least one application identifier.

In this way, the flexibility of displaying, by the electronic device, interfaces through windows is improved.

Optionally, in this embodiment of this application, after step 202, the application interface display method provided in this embodiment of this application further includes the following step 901 and step 902.

Step 901: The electronic device receives a sixth input of the user for a first application interface window when the first application interface window in the application interface window corresponding to the at least one application identifier is displayed at a first window level and another application interface window other than the first application interface window in the application interface window corresponding to the at least one application identifier is displayed at a second window level.

Optionally, in this embodiment of this application, the sixth input may be a touch input (such as a tap input, a drag input, or a slide input), a preset gesture input, or another feasibility input. This is not limited in this embodiment of this application.

For example, the sixth input is used to adjust a window level of the first application interface window to the second window level.

Optionally, in the embodiments of this application, the sixth input includes a long-press input of the user for the first application interface window and a drag input of the user for the first application interface window. In other words, the user may directly drag the first application interface window without ending the long-press input.

It may be understood that, when the window level of the first application interface window is different from a window level of another application interface window, the user may perform input on the first application interface window, to adjust the window level of the first application interface window to a window level that is the same as the window level of the another application interface window.

Step 902: The electronic device adjusts the window level of the first application interface window to the second window level in response to the sixth input.

For example, when the user long presses and drags the first application interface window, if the another application interface window is displayed at an end position of dragging of the user, the electronic device may reduce the another application interface window for display.

For example, as shown in FIG. 9, the first application interface window (for example, an application interface window corresponding to the identifier of the application 3) is displayed at the first window level, and the another application interface window is displayed at the second window level. The user may long press and drag the first application interface window. As shown in (D) in FIG. 7, the mobile phone adjusts a window level of the application interface window corresponding to the identifier of the application 3 to be the same as the window level of the another window, displays the window level at an end position of the input of the user, and reduces and displays an application interface window corresponding to the identifier of the application 2.

Optionally, in this embodiment of this application, when the first application interface window and the another application interface window are displayed at a same window level (for example, the first window level), the user may perform input on the first application interface window, to trigger the electronic device to adjust the window level of the first application interface window to the second window level.

For example, the electronic device may display the first application interface window in the floating manner at the end position of the drag input of the user, that is, the window level of the first application interface window is a top layer, and the first application interface window is located above the another application interface window.

For example, after the first application interface window is displayed at another position in the floating manner, no content is displayed in an original display region of the first application interface window, and the electronic device may magnify and display an application interface window adjacent to the first application interface window.

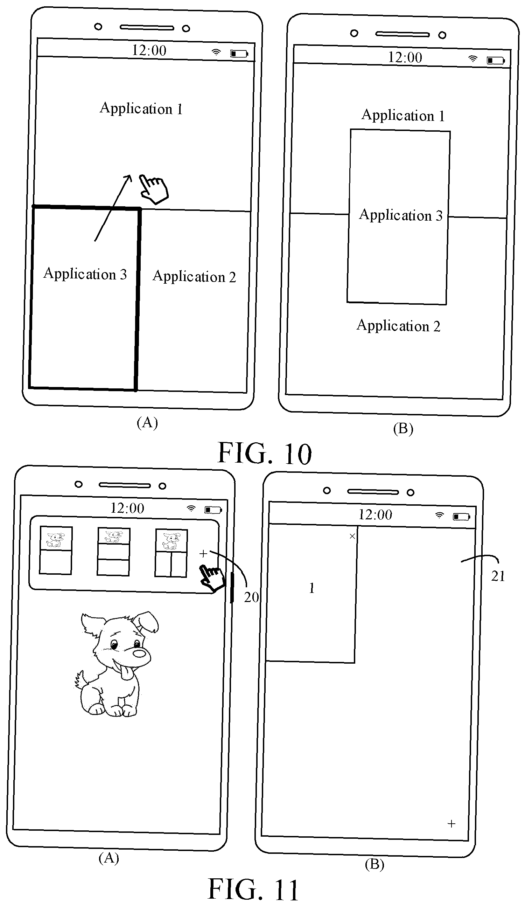

For example, with reference to (D) in FIG. 7, as shown in (A) in FIG. 10, the user may long press and drag the first application interface window (for example, the application interface window corresponding to the identifier of the application 3). As shown in (B) in FIG. 10, the mobile phone displays the application interface window corresponding to the identifier of the application 3 above another window at the end position of the input of the user, and magnifies and displays the application interface window corresponding to the identifier of the application 2.

In this way, the diversity and the flexibility of displaying, by the electronic device, interfaces through windows are improved.

Optionally, in this embodiment of this application, after the electronic device displays the at least one interface layout template, the user may perform input on a control for creating the interface layout template, to trigger the electronic device to display a creation interface of the interface layout template.

For example, the interface layout template creation interface includes a newly created window by default, and the user may drag an edge of the window to adjust a size of the window.

For example, as shown in (A) in FIG. 11, the mobile phone displays the at least one interface layout template, and displays a control 20 for creating the interface layout template. The user may perform input on the control 20 for creating the interface layout template. As shown in (B) in FIG. 11, the mobile phone displays an interface layout template creation interface 21, and the interface layout template creation interface 21 includes a newly created window 1.

For example, the interface layout template creation interface includes an add control. The user may perform input on the add control, to trigger the electronic device to add a window with a default size, and the user may drag an edge of the window to adjust the window size.

For example, the electronic device may set a threshold of a window quantity based on a screen size of the electronic device and performance of the electronic device. When the window quantity reaches the threshold, the add control is set to a non-respondable control, that is, after the user performs input on the add control, the electronic device does not perform a corresponding operation.

For example, the user may perform input on a close control in the newly created window, to trigger the electronic device to remove a corresponding window.

For example, after the user triggers the electronic device to create a plurality of windows, if the user performs input on a save control, the electronic device may be triggered to adjust the plurality of newly created windows, and save a newly created interface layout template.

For example, that the electronic device adjusts the plurality of newly created windows may be that an entire screen is filled with the plurality of newly created windows, that is, the windows are automatically absorbed.

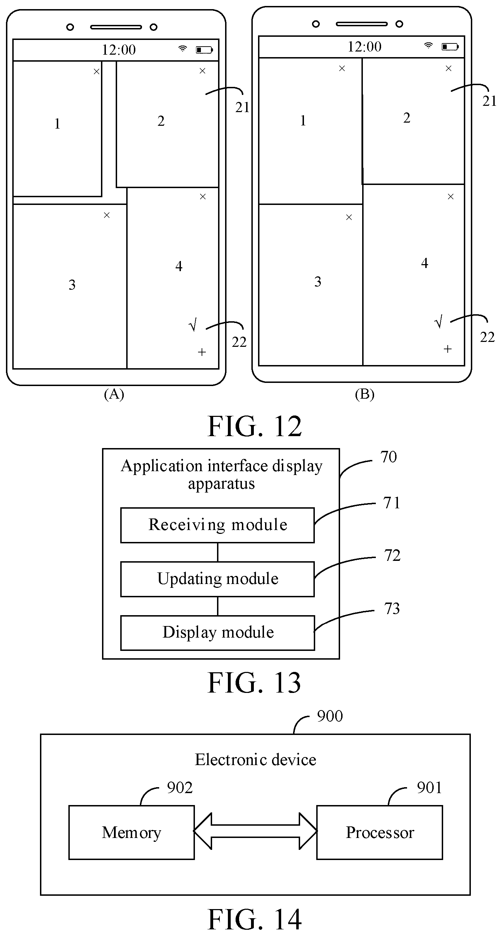

For example, as shown in (A) in FIG. 12, the interface layout template creation interface 21 includes the plurality of newly created windows. After the user taps the save control 22, as shown in (B) in FIG. 12, the mobile phone adjusts the plurality of newly created windows.

In this way, when the at least one interface layout template provided by the electronic device cannot satisfy a user requirement, the user is free to create a new interface layout template, to trigger the electronic device to display the application interface window in an interface layout manner corresponding to the interface layout template created by the user, to improve the diversity and the flexibility of displaying interfaces through windows.

It should be noted that, embodiments of this application provide an application interface display method, and an execution entity may be an application interface display apparatus. In the embodiments of this application, an example in which the application interface display apparatus performs the application interface display method is used to explain the application interface display apparatus provided in the embodiments of this application.

FIG. 13 is a schematic diagram of a possible structure of an application interface display apparatus according to an embodiment of this application. As shown in FIG. 13, an application interface display apparatus 70 may include a receiving module 71, an update module 72, and a display module 73.

The receiving module 71 is configured to receive a first input of a user. The update module 72 is configured to update display positions of a plurality of application identifiers in response to the first input received by the receiving module 71. The display module 73 is configured to: when at least one application identifier in the plurality of application identifiers at least partially overlaps with a target identifier, display an application interface window corresponding to the at least one application identifier in a first interface layout manner, where the application identifier is an application icon, a background application card, or an application interface thumbnail, where when the target identifier is a target interface layout template, the first interface layout manner is an interface layout manner corresponding to the target interface layout template. The display module 73 is specifically configured to: when the target identifier is a first application identifier, display the application interface window corresponding to the at least one application identifier and an application interface window corresponding to the first application identifier in the first interface layout manner.

An embodiment of this application provides the application interface display apparatus. In one case, an electronic device changes the display positions of the plurality of application identifiers because of user input, and when the at least one application identifier in the plurality of application identifiers whose display positions are changed at least partially overlaps with the target interface layout template, the application interface display apparatus may determine to display the application interface window corresponding to the at least one application identifier in the interface layout manner corresponding to the target interface layout template. In another case, when the electronic device changes the display positions of the plurality of application identifiers because of the user input, and the at least one application identifier in the plurality of application identifiers whose display positions are changed at least partially overlaps with the first application identifier, the application interface display apparatus may determine the first interface layout manner, and display the application interface window corresponding to the at least one application identifier and the application interface window corresponding to the first application identifier in the first interface layout manner. Therefore, diversity and flexibility of displaying interfaces through windows are improved.

In a possible implementation, the target identifier is the target interface layout template, and before the receiving module 71 receives the first input of the user, the display module 73 is further configured to: display at least one interface layout template and a first interface, where each interface layout template corresponds to one interface layout manner, the at least one interface layout template includes the target interface layout template, the first interface is a desktop or a background application interface, the desktop includes the application icon, and the background application interface includes the background application card; and after the update module 72 updates the display positions of the plurality of application identifiers and before the display module displays the application interface window corresponding to the at least one application identifier in the first interface layout manner, when the at least one application identifier in the plurality of application identifiers at least partially overlaps with the at least one interface layout template, display the application interface window corresponding to the at least one application identifier in the at least one interface layout template; The receiving module 71 is further configured to receive a second input for the target interface layout template in the at least one interface layout template. The display module 73 is specifically configured to: update, in response to the second input received by the receiving module 71, the first interface to a second interface displayed in the first interface layout manner, where the second interface includes an application interface window displayed in the target interface layout template.

In a possible implementation, the receiving module 71 is further configured to: after the display module 73 updates the first interface to the second interface displayed in the first interface layout manner, when a blank window exists in the second interface, receive a third input of the user for a respondable object in the application interface window included in the second interface. The update module 72 is further configured to: update, in response to the third input received by the receiving module 71, an interface corresponding to the respondable object to the blank window for display.

In a possible implementation, the receiving module 71 is further configured to: after the display module 73 displays the application interface window corresponding to the at least one application identifier in the at least one interface layout template, receive a fourth input of the user for a first application interface when a blank window exists in the target interface layout template, where the first application interface is an application interface included in an application interface window in a first interface layout template in the at least one interface layout template. The updating module 72 is further configured to: update, in response to the fourth input received by the receiving module 71, the first application interface to the blank window for display.

In a possible implementation, the target identifier is the first application identifier, the application identifier is the application interface thumbnail, and the display module 73 is specifically configured to display the application interface window corresponding to the at least one application identifier and the application interface window corresponding to the first application identifier in an interface layout manner corresponding to a combined effect, where the combined effect is determined through updated display positions of the plurality of application identifiers.

In a possible implementation, the display module 73 is specifically configured to: when a combined effect of the at least one application identifier and the first application identifier is a partial overlapping effect, display the application interface window corresponding to the at least one application identifier and the application interface window corresponding to the first application identifier in an interface overlapping layout manner of the partial overlapping effect; or when a combined effect of the at least one application identifier and the first application identifier is a complete overlapping effect, display the application interface window corresponding to the at least one application identifier and the application interface window corresponding to the first application identifier in an interface split-screen layout manner.

In a possible implementation, the application identifier is the application interface thumbnail, the application interface thumbnail is an application interface thumbnail of at least one application that is running, and the application interface display apparatus 70 provided in this embodiment of this application further includes a determining module. The determining module is configured to: determine a minimum display size of an application interface of the at least one application based on a screen size of an electronic device before the receiving module 71 receives the first input of the user; determine at least one display size based on the minimum display size and historical use information of each application, where each display size is a display size of an application interface of an application in an application preview interface; and determine a display order of the application interface of the at least one application based on the historical use information of each application. The display module 73 is specifically configured to display the application interface thumbnail of the at least one application in the application preview interface based on the at least one display size and the display order.

In a possible implementation, the application interface display apparatus 70 provided in this embodiment of this application further includes a processing module. The display module 73 is further configured to display a first control after displaying the application interface window corresponding to the at least one application identifier in the first interface layout manner, where the first control is configured to adjust a layout manner of the application interface window corresponding to the at least one application identifier. The receiving module 71 is further configured to receive a fifth input of the user for the first control. The processing module is configured to: mirror flip or rotate, by a preset degree, the application interface window corresponding to the at least one application identifier in response to the fifth input received by the receiving module 71.

In a possible implementation, the application interface display apparatus 70 provided in this embodiment of this application further includes an adjustment module. The receiving module 71 is further configured to: after the display module 73 displays the application interface window corresponding to the at least one application identifier in the first interface layout manner, receive a sixth input of the user for a first application interface window when the first application interface window in the application interface window corresponding to the at least one application identifier is displayed at a first window level and another application interface window other than the first application interface window in the application interface window corresponding to the at least one application identifier is displayed at a second window level. The adjustment module is configured to adjust a window level of the first application interface window to the second window level in response to the sixth input.

The application interface display apparatus in this embodiment of this application may be an electronic device, or may be a component in an electronic device, for example, an integrated circuit or a chip. The electronic device may be a terminal, or may be a device other than the terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a server, a network attached storage (Network Attached Storage, NAS), a personal computer (personal computer, PC), a television (television, TV), a teller machine, a self-service machine, or the like. This is not specifically limited in embodiments of this application.

The application interface display apparatus in the embodiments of this application may be an apparatus with an operating system. The operating system may be an Android (Android) operating system, an iOS operating system, or other possible operating systems. This is not limited in the embodiments of this application.

The application interface display apparatus provided in this embodiment of this application can implement the processes implemented in the foregoing method embodiments. To avoid repetition, details are not described herein again.

Optionally, as shown in FIG. 14, an embodiment of this application further provides an electronic device 900, including a processor 901, a memory 902, and a program or instructions that are stored in the memory 902 and that can be run on the processor 901. When the program or the instructions are executed by the processor 901, the processes of the embodiments of the application interface display method are implemented, and a same technical effect can be achieved. To avoid repetition, details are not described herein again.

It should be noted that, the electronic device in the embodiments of this application includes a mobile electronic device and a non-mobile electronic device described above.

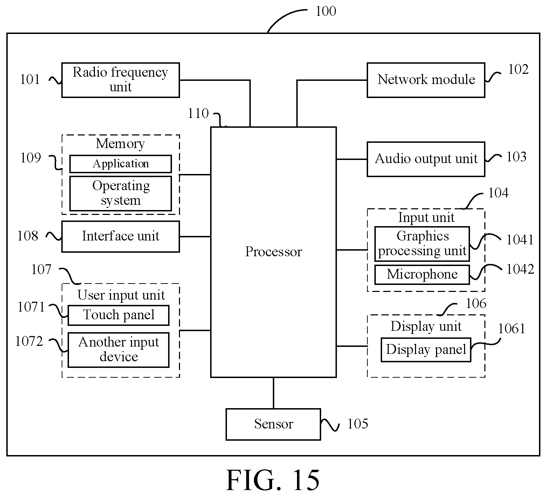

FIG. 15 is a schematic diagram of a hardware structure of an electronic device for implementing an embodiment of this application.

An electronic device 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (such as a battery) for supplying power to the components. The power supply may be logically connected to the processor 110 through a power management system, to implement functions such as charging, discharging, and power consumption management through the power management system. The structure of the electronic device shown in FIG. 15 does not constitute a limitation on the electronic device, and the electronic device may include more or fewer components than those shown in the figure, or some components may be combined, or a different component arrangement may be used. This is not described herein again.

The user input unit 107 is configured to receive a first input of a user.

The processor 110 is configured to update display positions of a plurality of application identifiers in response to the first input.

The display unit 106 is configured to: when at least one application identifier in the plurality of application identifiers at least partially overlaps with a target identifier, display an application interface window corresponding to the at least one application identifier in a first interface layout manner, where the application identifier is an application icon, a background application card, or an application interface thumbnail, where when the target identifier is a target interface layout template, the first interface layout manner is an interface layout manner corresponding to the target interface layout template.

The display unit 106 is specifically configured to: when the target identifier is a first application identifier, display the application interface window corresponding to the at least one application identifier and an application interface window corresponding to the first application identifier in the first interface layout manner.

An embodiment of this application provides the electronic device. In one case, the electronic device changes the display positions of the plurality of application identifiers because of user input, and when the at least one application identifier in the plurality of application identifiers whose display positions are changed at least partially overlaps with the target interface layout template, the electronic device may determine to display the application interface window corresponding to the at least one application identifier in the interface layout manner corresponding to the target interface layout template. In another case, when the electronic device changes the display positions of the plurality of application identifiers because of the user input, and the at least one application identifier in the plurality of application identifiers whose display positions are changed at least partially overlaps with the first application identifier, the electronic device may determine the first interface layout manner, and display the application interface window corresponding to the at least one application identifier and the application interface window corresponding to the first application identifier in the first interface layout manner. Therefore, diversity and flexibility of displaying interfaces through windows are improved.

In some embodiments, the target identifier is the target interface layout template, and before the user input unit 107 receives the first input of the user, the display unit 106 is further configured to display at least one interface layout template and a first interface, where each interface layout template corresponds to one interface layout manner, the at least one interface layout template includes the target interface layout template, the first interface is a desktop or a background application interface, the desktop includes the application icon, and the background application interface includes the background application card; and after the processor 110 updates the display positions of the plurality of application identifiers and before the display unit displays the application interface window corresponding to the at least one application identifier in the first interface layout manner, when the at least one application identifier in the plurality of application identifiers at least partially overlaps with the at least one interface layout template, display the application interface window corresponding to the at least one application identifier in the at least one interface layout template.

The user input unit 107 is further configured to receive a second input for the target interface layout template in the at least one interface layout template.

The display unit 106 is specifically configured to: update, in response to the second input, the first interface to a second interface displayed in the first interface layout manner, where the second interface includes an application interface window displayed in the target interface layout template.

Optionally, the user input unit 107 is further configured to: after the display unit 106 updates the first interface to the second interface displayed in the first interface layout manner, when a blank window exists in the second interface, receive a third input of the user for a respondable object in the application interface window included in the second interface.

The processor 110 is further configured to: update, in response to the third input, an interface corresponding to the respondable object to the blank window for display.

Optionally, the user input unit 107 is further configured to: after the display unit 106 displays the application interface window corresponding to the at least one application identifier in the at least one interface layout template, receive a fourth input of the user for a first application interface when a blank window exists in the target interface layout template, where the first application interface is an application interface included in an application interface window in a first interface layout template in the at least one interface layout template.

The processor 110 is further configured to: update, in response to the fourth input, the first application interface to the blank window for display.

Optionally, the target identifier is the first application identifier, the application identifier is the application interface thumbnail, and the display unit 106 is specifically configured to display the application interface window corresponding to the at least one application identifier and the application interface window corresponding to the first application identifier in an interface layout manner corresponding to a combined effect, where the combined effect is determined through updated display positions of the plurality of application identifiers.

Optionally, the display unit 106 is specifically configured to: when a combined effect of the at least one application identifier and the first application identifier is a partial overlapping effect, display the application interface window corresponding to the at least one application identifier and the application interface window corresponding to the first application identifier in an interface overlapping layout manner of the partial overlapping effect; or when a combined effect of the at least one application identifier and the first application identifier is a complete overlapping effect, display the application interface window corresponding to the at least one application identifier and the application interface window corresponding to the first application identifier in an interface split-screen layout manner.

Optionally, the application identifier is the application interface thumbnail, the application interface thumbnail is the application interface thumbnail of at least one application that is running, and the processor 110 is configured to: determine a minimum display size of an application interface of the at least one application based on a screen size of the electronic device before the user input unit 107 receives the first input of the user; determine at least one display size based on the minimum display size and historical use information of each application, where each display size is a display size of an application interface of an application in an application preview interface; and determine a display order of the application interface of the at least one application based on the historical use information of each application.

The display unit 106 is specifically configured to display the application interface thumbnail of the at least one application in the application preview interface based on the at least one display size and the display order.

Optionally, the display unit 106 is further configured to display a first control after displaying the application interface window corresponding to the at least one application identifier in the first interface layout manner, where the first control is configured to adjust a layout manner of the application interface window corresponding to the at least one application identifier.

The user input unit 107 is further configured to receive a fifth input of the user for the first control.

The processor 110 is configured to: mirror flip or rotate, by a preset degree, an application interface window corresponding to the at least one application identifier in response to the fifth input.

Optionally, the user input unit 107 is further configured to: after the display unit 106 displays the application interface window corresponding to the at least one application identifier in the first interface layout manner, receive a sixth input of the user for a first application interface window when the first application interface window in the application interface window corresponding to the at least one application identifier is displayed at a first window level and another application interface window other than the first application interface window in the application interface window corresponding to the at least one application identifier is displayed at a second window level.

The processor 110 is configured to adjust the window level of the first application interface window to the second window level in response to the sixth input.

The electronic device provided in this embodiment of this application can implement the processes implemented in the foregoing method embodiments, and a same technical effect can be achieved. To avoid repetition, details are not described herein again.

For beneficial effects having various implementations in this embodiment, reference may be specifically made to the beneficial effects having corresponding implementations in the foregoing method embodiments. To avoid repetition, details are not described herein again.

It should be understood that, the input unit 104 may include a graphics processing unit (Graphics Processing Unit, GPU) 1041 and a microphone 1042. The graphics processing unit 1041 performs processing on image data of a static picture or a video that is obtained by an image acquisition device (for example, a camera) in a video acquisition mode or an image acquisition mode. The display unit 106 may include a display panel 1061, and the display panel 1061 may be configured by using a liquid crystal display, an organic light-emitting diode, or the like. The user input unit 107 includes at least one of a touch panel 1071 and another input device 1072. The touch panel 1071 may also be referred to as a touchscreen. The touch panel 1071 may include two parts: a touch detection apparatus and a touch controller. The another input device 1072 may include, but is not limited to, a physical keyboard, a functional key (such as a volume control key or a switch key), a track ball, a mouse, and a joystick. Details are not described herein again.

The memory 109 may be configured to store a software program and various data. The memory 109 may mainly include a first storage area that stores a program or instructions and a second storage area that stores data. The first storage area may store an operating system, an application or the instructions required by at least one function (for example, a sound playback function and an image display function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 109 in embodiments of this application includes, but is not limited to, the memories and any other memory of a suitable type.

The processor 110 may include one or more processing units. Optionally, the processor 110 may integrate an application processor and a modem processor. The application processor mainly processes an operation involving an operating system, a user interface, an application, and the like. The modem processor mainly processes a wireless communication signal, such as a baseband processing signal. It may be understood that the foregoing modem may either not be integrated into the processor 110.

An embodiment of this application further provides a readable storage medium. The readable storage medium stores a program or instructions. When the program or the instructions are executed by a processor, the processes of the application interface display method are implemented, and a same technical effect can be achieved. To avoid repetition, details are not described herein again.

The processor may be a processor of the electronic device in the foregoing embodiments. The readable storage medium includes a computer-readable storage medium, for example, a computer read-only memory ROM, a random access memory RAM, a magnetic disk, or an optical disk

An embodiment of this application further provides a chip. The chip includes a processor and a communication interface. The communication interface is coupled to the processor. The processor is configured to run a program or instructions, to implement the processes of the method embodiment, and a same technical effect can be achieved. To avoid repetition, details are not described herein again.

It should be understood that, the chip mentioned in this embodiment of this application may also be referred to as a system chip, a chip system, a system on chip, or the like.

An embodiment of this application provides a computer program product. The program product is stored in a storage medium. The program product is executed by at least one processor to implement the processes of the method embodiment, and a same technical effect can be achieved. To avoid repetition, details are not described herein again.

It should be noted that the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ...... " does not exclude that there are still other same elements in the processes, methods, objects, or apparatuses. In addition, it should be noted that, a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in embodiments of this application.

Embodiments of this application are described above with reference to the accompanying drawings. However, this application is not limited to the foregoing specific implementations. The foregoing specific implementations are illustrative instead of imitative. Enlightened by this application, a person of ordinary skill in the art can make many forms without departing from the idea of this application and the scope of protection of the claims. All of the forms fall within the protection of this application.

## Claims

1. An application interface display method, wherein the method comprises:
receiving a first input of a user;
updating display positions of a plurality of application identifiers in response to the first input; and when at least one application identifier in the plurality of application identifiers at least partially overlaps with a target identifier, displaying an application interface window corresponding to the at least one application identifier in a first interface layout manner, wherein an application identifier is an application icon, a background application card, or an application interface thumbnail, wherein
when the target identifier is a target interface layout template, the first interface layout manner is an interface layout manner corresponding to the target interface layout template; or
when the target identifier is a first application identifier, the displaying an application interface window corresponding to the at least one application identifier in a first interface layout manner comprises:
displaying the application interface window corresponding to the at least one application identifier and an application interface window corresponding to the first application identifier in the first interface layout manner.

2. The method according to claim 1, wherein the target identifier is the target interface layout template, and before the receiving a first input of a user, the method further comprises:
displaying at least one interface layout template and a first interface, wherein each interface layout template corresponds to one interface layout manner, the at least one interface layout template comprises the target interface layout template, the first interface is a desktop or a background application interface, the desktop comprises the application icon, and the background application interface comprises the background application card; and
after the updating display positions of a plurality of application identifiers and before the displaying an application interface window corresponding to the at least one application identifier in a first interface layout manner, the method further comprises:
when the at least one application identifier in the plurality of application identifiers at least partially overlaps with the at least one interface layout template, displaying the application interface window corresponding to the at least one application identifier in the at least one interface layout template; and
receiving a second input for the target interface layout template in the at least one interface layout template; and
the displaying an application interface window corresponding to the at least one application identifier in a first interface layout manner comprises:
updating, in response to the second input, the first interface to a second interface displayed in the first interface layout manner, wherein the second interface comprises an application interface window displayed in the target interface layout template.

3. The method according to claim 2, wherein after the updating the first interface to a second interface displayed in the first interface layout manner, the method further comprises:
when a blank window exists in the second interface, receiving a third input of a user for a respondable object in the application interface window comprised in the second interface; and
updating, in response to the third input, an interface corresponding to the respondable object to the blank window for display.

4. The method according to claim 2, wherein after the displaying the application interface window corresponding to the at least one application identifier in the at least one interface layout template, the method further comprises:
receiving a fourth input of a user for a first application interface when a blank window exists in the target interface layout template, wherein the first application interface is an application interface comprised in an application interface window in a first interface layout template in the at least one interface layout template; and
updating, in response to the fourth input, the first application interface to the blank window for display.

5. The method according to claim 1, wherein the target identifier is the first application identifier, and the application identifier is the application interface thumbnail; and
the displaying the application interface window corresponding to the at least one application identifier and an application interface window corresponding to the first application identifier in the first interface layout manner comprises:
displaying the application interface window corresponding to the at least one application identifier and the application interface window corresponding to the first application identifier in an interface layout manner corresponding to a combined effect, wherein the combined effect is determined through updated display positions of the plurality of application identifiers.

6. The method according to claim 5, wherein the displaying the application interface window corresponding to the at least one application identifier and the application interface window corresponding to the first application identifier in an interface layout manner corresponding to a combined effect comprises:
when a combined effect of the at least one application identifier and the first application identifier is a partial overlapping effect, displaying the application interface window corresponding to the at least one application identifier and the application interface window corresponding to the first application identifier in an interface overlapping layout manner of the partial overlapping effect; or
when a combined effect of the at least one application identifier and the first application identifier is a complete overlapping effect, displaying the application interface window corresponding to the at least one application identifier and the application interface window corresponding to the first application identifier in an interface split-screen layout manner.

7. The method according to claim 1, wherein the application identifier is the application interface thumbnail, the application interface thumbnail is an application interface thumbnail of at least one application that is running, and before the receiving a first input of a user, the method further comprises:
determining a minimum display size of an application interface of the at least one application based on a screen size of an electronic device;
determining at least one display size based on the minimum display size and historical use information of each application, wherein each display size is a display size of an application interface of an application in an application preview interface;
determining a display order of the application interface of the at least one application based on the historical use information of each application; and
displaying the application interface thumbnail of the at least one application in the application preview interface based on the at least one display size and the display order.

8. The method according to claim 1, wherein after the displaying an application interface window corresponding to the at least one application identifier in a first interface layout manner, the method further comprises:
displaying a first control, wherein the first control is configured to adjust a layout manner of the application interface window corresponding to the at least one application identifier;
receiving a fifth input of a user for the first control; and
mirror flipping or rotating, by a preset degree, the application interface window corresponding to the at least one application identifier in response to the fifth input.

9. The method according to claim 1, wherein after the displaying an application interface window corresponding to the at least one application identifier in a first interface layout manner, the method further comprises:
receiving a sixth input of a user for a first application interface window when the first application interface window in the application interface window corresponding to the at least one application identifier is displayed at a first window level and another application interface window other than the first application interface window in the application interface window corresponding to the at least one application identifier is displayed at a second window level; and
adjusting a window level of the first application interface window to the second window level in response to the sixth input.

10. An application interface display apparatus, wherein the application interface display apparatus comprises a receiving module, an update module, and a display module, wherein
the receiving module is configured to receive a first input of a user;
the update module is configured to update display positions of a plurality of application identifiers in response to the first input received by the receiving module;
the display module is configured to: when at least one application identifier in the plurality of application identifiers at least partially overlaps with a target identifier, display an application interface window corresponding to the at least one application identifier in a first interface layout manner, wherein an application identifier is an application icon, a background application card, or an application interface thumbnail, wherein
when the target identifier is a target interface layout template, the first interface layout manner is an interface layout manner corresponding to the target interface layout template; or
the display module is specifically configured to: when the target identifier is a first application identifier, display the application interface window corresponding to the at least one application identifier and an application interface window corresponding to the first application identifier in the first interface layout manner.

11. The apparatus according to claim 10, wherein the target identifier is the target interface layout template, and before the receiving module receives the first input of the user, the display module is further configured to: display at least one interface layout template and a first interface, wherein each interface layout template corresponds to one interface layout manner, the at least one interface layout template comprises the target interface layout template, the first interface is a desktop or a background application interface, the desktop comprises the application icon, and the background application interface comprises the background application card; and after the update module updates the display positions of the plurality of application identifiers and before the display module displays the application interface window corresponding to the at least one application identifier in the first interface layout manner, when the at least one application identifier in the plurality of application identifiers at least partially overlaps with the at least one interface layout template, display the application interface window corresponding to the at least one application identifier in the at least one interface layout template;
the receiving module is further configured to receive a second input for the target interface layout template in the at least one interface layout template; and
the display module is specifically configured to: update, in response to the second input received by the receiving module, the first interface to a second interface displayed in the first interface layout manner, wherein the second interface comprises an application interface window displayed in the target interface layout template.

12. The apparatus according to claim 11, wherein the receiving module is further configured to: after the display module updates the first interface to the second interface displayed in the first interface layout manner, when a blank window exists in the second interface, receive a third input of a user for a respondable object in the application interface window comprised in the second interface; and
the update module is further configured to: update, in response to the third input received by the receiving module, an interface corresponding to the respondable object to the blank window for display.

13. The apparatus according to claim 11, wherein the receiving module is further configured to: after the display module displays the application interface window corresponding to the at least one application identifier in the at least one interface layout template, receive a fourth input of a user for a first application interface when a blank window exists in the target interface layout template, wherein the first application interface is an application interface comprised in an application interface window in a first interface layout template in the at least one interface layout template; and
the update module is further configured to: update, in response to the fourth input received by the receiving module, the first application interface to the blank window for display.

14. The apparatus according to claim 10, wherein the target identifier is the first application identifier, and the application identifier is the application interface thumbnail; and
the display module is specifically configured to display the application interface window corresponding to the at least one application identifier and the application interface window corresponding to the first application identifier in an interface layout manner corresponding to a combined effect, wherein the combined effect is determined through updated display positions of the plurality of application identifiers.

15. The apparatus according to claim 14, wherein
the display module is specifically configured to: when a combined effect of the at least one application identifier and the first application identifier is a partial overlapping effect, display the application interface window corresponding to the at least one application identifier and the application interface window corresponding to the first application identifier in an interface overlapping layout manner of the partial overlapping effect; or when a combined effect of the at least one application identifier and the first application identifier is a complete overlapping effect, display the application interface window corresponding to the at least one application identifier and the application interface window corresponding to the first application identifier in an interface split-screen layout manner.

16. The apparatus according to claim 10, wherein the application identifier is the application interface thumbnail, the application interface thumbnail is an application interface thumbnail of at least one application that is running, and the application interface display apparatus further comprises a determining module;
the determining module is configured to: determine a minimum display size of an application interface of the at least one application based on a screen size of an electronic device before the receiving module receives the first input of the user; determine at least one display size based on the minimum display size and historical use information of each application, wherein each display size is a display size of an application interface of an application in an application preview interface; and determine a display order of the application interface of the at least one application based on the historical use information of each application; and
the display module is specifically configured to display the application interface thumbnail of the at least one application in the application preview interface based on the at least one display size and the display order.

17. The apparatus according to claim 10, wherein the application interface display apparatus further comprises a processing module;
the display module is further configured to display a first control after displaying the application interface window corresponding to the at least one application identifier in the first interface layout manner, wherein the first control is configured to adjust a layout manner of the application interface window corresponding to the at least one application identifier;
the receiving module is further configured to receive a fifth input of a user for the first control; and
the processing module is configured to: mirror flip or rotate, by a preset degree, the application interface window corresponding to the at least one application identifier in response to the fifth input received by the receiving module.

18. The apparatus according to claim 10, wherein the application interface display apparatus further comprises an adjustment module;
the receiving module is further configured to: after the display module displays the application interface window corresponding to the at least one application identifier in the first interface layout manner, receive a sixth input of a user for a first application interface window when the first application interface window in the application interface window corresponding to the at least one application identifier is displayed at a first window level and another application interface window other than the first application interface window in the application interface window corresponding to the at least one application identifier is displayed at a second window level; and
the adjustment module is configured to adjust a window level of the first application interface window to the second window level in response to the sixth input.

19. An electronic device, comprising a processor and a memory, wherein the memory stores a program or instructions executable on the processor, and when the program or instructions are executed by the processor, the steps of the application interface display method according to any one of claims 1 to 9 are implemented.

20. A readable storage medium, wherein the readable storage medium stores a program or instructions, and when the program or instructions are executed by a processor, the steps of the application interface display method according to any one of claims 1 to 9 are implemented.
